# EUROPEAN PATENT SPECIFICATION

(11) **EP 1 914 847 B1**
(45) Date of publication and mention of the grant of the patent: **23.01.2013**
(21) Application number: 07118229.9
(22) Date of filing: 10.10.2007
(51) Int. Cl.: H01R 13/74, H01R 13/629

(54) **Cable connector for vehicle door**
Kabelbinder für eine Fahrzeugtür
Connecteur de câble pour porte de véhicule

(30) Priority: 18.10.2006 KR 20060101540
(43) Date of publication of application: 23.04.2008
(73) Proprietor: Tyco Electronics AMP Korea Limited, Kyungsangbuk-Do, Kyungsan-Si (KR)
(72) Inventor: Lee, Chul Sub c/o Tyco Electronics AMP Korea Ltd., Kyungsangbuk-Do Kyungsan-Si (KR); Lim, Kun Tak c/o Tyco Electronics AMP Korea Ltd., Kyungsangbuk-Do Kyungsan-Si (KR); Kwon, Gi Chan c/o Tyco Electronics AMP Korea Ltd., Kyungsangbuk-Do Kyungsan-Si (KR)
(74) Representative: Johnstone, Douglas Ian

(56) References cited:
- DE-U1- 29 823 075
- JP-A- 11 067 350
- US-A- 5 391 086
- US-A- 5 660 556
- US-B1- 6 183 275

## Description

The present invention relates to a cable connector for a vehicle door, and more particularly, to a cable connector for a vehicle door which enables a worker to simply assemble a female connector and a male connector without using any coupling means such as a bolt, and to install a male connector to a panel of a vehicle body without any mistake.

Generally, a door of a vehicle is provided with operating devices, such as a power window device, a door locking device, a side mirror adjusting device, etc., which are operated by a power source. The respective operating devices are connected to a main controller mounted in a vehicle body by cables so as to be controlled by a driver.

The cables are drawn out from a side portion of the vehicle body, and are put into the door. Typically, a panel of the vehicle body is provided with cable connectors to connect the cables drawn out from the vehicle body and the cables extending from the respective operating devices mounted in the door.

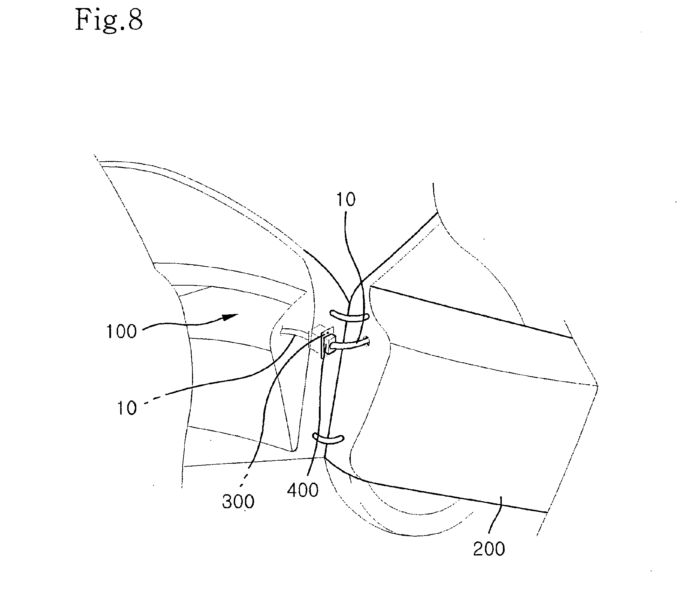

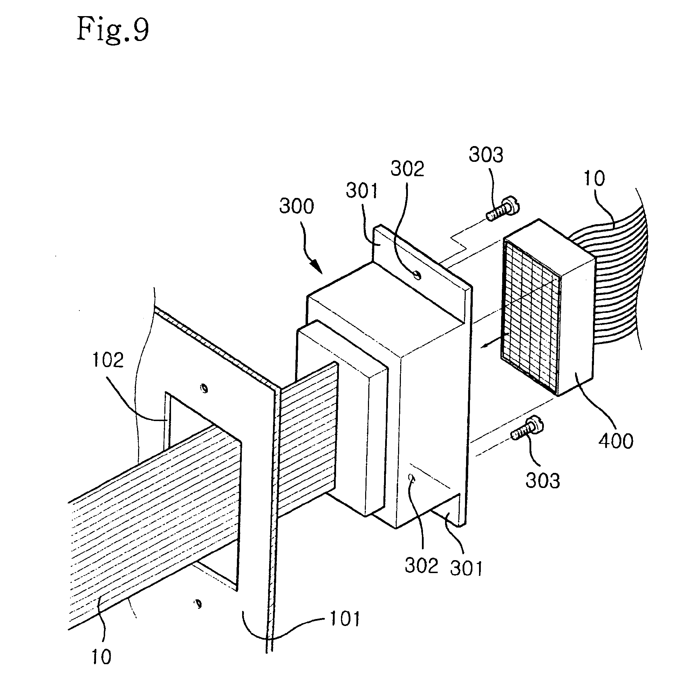

FIG. 8 is a schematic view illustrating an installed state of a conventional cable connector of a vehicle, and FIG. 9 is an exploded perspective view illustrating an installed state of the conventional cable connector.

The conventional cable connector includes a male connector 300 which is connected with a cable 10 drawn out from the interior of a vehicle body 100, and a female connector 400 which is connected with a cable 10 drawn out from the interior of a door 200 and is inserted into the male connector 300.

The male connector 300 is provided with flanges 301 extending outwardly. In order to fixedly mount the male connector 300 to a panel 101 of the vehicle body having a connector mounting hole 102, the flanges 301 are formed with fixing holes 302 through which bolts 303 are tightened.

When mounting the conventional cable connector as structured above, the male connector 300, connected with the cable 10 drawn out from the vehicle body 100, is fitted through the connector mounting hole 102 formed at the panel 101 of the vehicle body, and then the flanges 301 of the male connector 300 are fixed to the panel 101 of the vehicle body by tightening the bolts 303 through the fixing holes 302 formed at the flanges 301.

Thereafter, the female connector 400 connected with the cable 10 drawn out from the door 200 is engaged with the male connector 300, thereby completing the process of assembling the cable connector.

However, the above conventional cable connector has the problem of taking much time to assemble, because the male connector is fixed to the panel of the vehicle body by tightening the bolts.

Also, it is inconvenient for a worker assembling the connector because of having to use a motor-operated screwdriver in a small space between the vehicle body and the door to fix the male connector to the vehicle body.

US patent 5588858 discloses a connector system comprising two connectors mated within a mounting wall. A first connector which is inserted into a hole of a mounting wall has resilient tines that press against the hole surface and that have latch parts at their front ends that form shoulders that engage a face of the wall. The second connector has a plurality of wedges that each move immediately inward of a corresponding tine as the connectors move together for mating, to prevent the tines from being radially inwardly deflected, to thereby lock the first connector to the mounting wall.

US patent 6183275 discloses a panel mounted connector comprising male and female connector housings. A lever arm is pivotally connected to the male connector hosing and co-operates with pins on the female connector housing to draw the housings together, in use. A snap fit projection enables the male connector housing to be fitted to an aperture in a panel. Sealing members prevent the ingress of moisture. Therefore, the present invention has been made in view of the above problems, and it is an object of the present invention to provide a cable connector for a vehicle door that enables a worker to simply assemble a female connector and a male connector without using any coupling means such as a bolt.

German utility model DE 29823075U1 discloses a cable connector suitable for a vehicle door comprising:
a male connector including a contact terminal and a fitting part with a flange between them;
a female connector including a contact terminal and engageable with the fitting part of the male connector;
a plurality of elastic members formed on an outer surface of the fitting part, the elastic members including latching recesses in which an edge of a connector mounting of a vehicle body panel is fittable; and
a guide connecting device including locking recesses formed on the inner surface of the fitting part and a slide lever having guide protrusions movable along the locking recesses and guide protrusions lockable in the locking recesses.

It is an object of the present invention to provide a cable connector for a vehicle door that enables a worker to install the male connector to a panel of a vehicle body without any mistake in the process of assembling the female connector and the male connector.

In accordance with the present invention, there is provided a cable connector as claimed in any of the accompanying claims.

The above and other objects, features and other advantages of the present invention will be more clearly understood from the following detailed description taken in conjunction with the accompanying drawings, in which:
FIG. 1 is an exploded perspective view illustrating a connector in accordance with a first embodiment of the present invention;
FIG. 2 is a perspective view illustrating an assembled state of the connector in accordance with the first embodiment of the present invention;
FIG. 3a illustrates a step of installing a male connector, in accordance with the first embodiment of the present invention, to a panel of a vehicle body and a step of temporarily engaging a female connector with the male connector;
FIG. 3b illustrates a step of assembling the connector, in accordance with the first embodiment of the present invention;
FIG. 4 is an exploded perspective view illustrating a connector in accordance with a second embodiment of the present invention.
FIG. 5 is a perspective view illustrating an assembled state of the connector in accordance with the second embodiment of the present invention;
FIG. 6 is a schematic sectional view taken along line B-B in FIG. 5;
FIG. 7a illustrates a step of installing a male connector, in accordance with the second embodiment of the present invention, to a panel of a vehicle body;
FIG. 7b illustrates a step of engaging a female connector, in accordance with the second embodiment of the present invention, with the male connector thereof;
FIG. 7c illustrates a step of assembling the connector, in accordance with the second embodiment of the present invention;
FIG. 8 is a schematic view illustrating an installed state of a conventional cable connector in a vehicle; and
FIG. 9 is an exploded perspective view illustrating the installed state of the conventional cable connector.

Now, preferred embodiments of the present invention will be described in detail with reference to the annexed drawings.

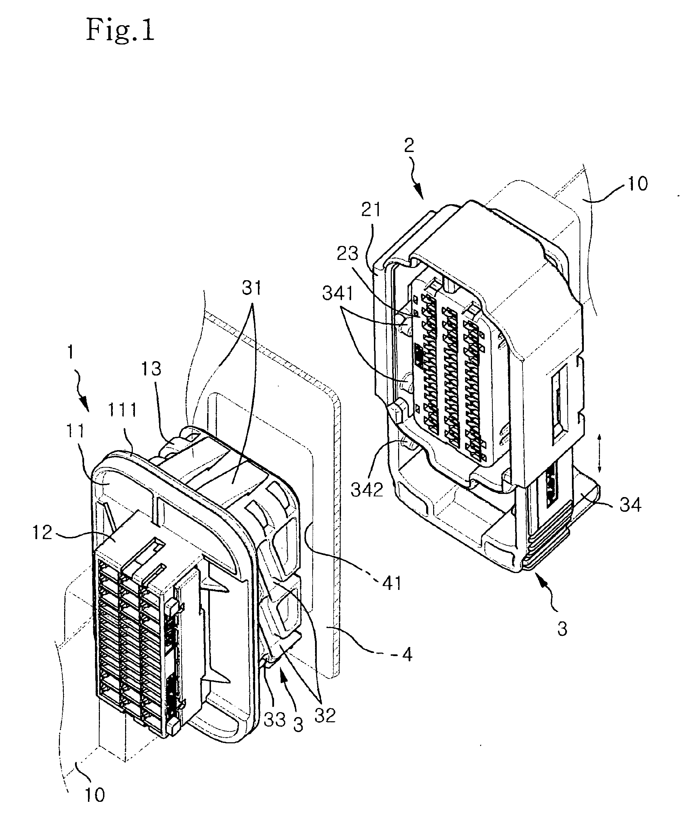

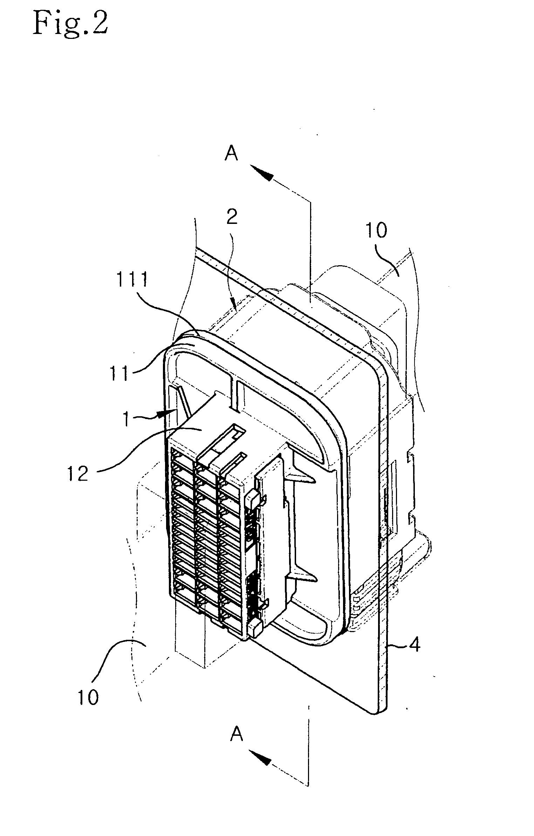

A connector according to the first embodiment, shown in FIGS 1 to 3b includes a male connector 1 which is fitted through a connector mounting hole 41 formed in a panel 4 of a vehicle body and connected with a cable 10, a female connector 2 which fixes the male connector 1 to the connector mounting hole 41 and is connected with a cable 10, and a guide connecting device 3 which is provided at the female connector 2 and the male connector 1 to connect the female connector 2 and the male connector 1.

The male connector 1 includes a contact terminal 12, a fitting part 13, a flange 11 provided between the contact terminal 12 and the fitting part 13, and a waterproof seal 111.

The contact terminal 12 is connected with the cable 10 drawn out from the vehicle body, and the fitting part 13 is formed so as to be fitted through the connector mounting hole 41 formed in the panel 4 of the vehicle body.

The waterproof seal 111 is provided on side portions of the flange 11 so that when the male connector 1 is fitted through the connector mounting hole 41 of the panel 4 of the vehicle body, the waterproof seal 111 closely contacts the panel 4 of the vehicle body around the connector mounting hole 41.

The female connector 2 includes a contact terminal 23 which is inserted into the fitting part 13 of the male connector 1.

The contact terminal 23 of the female connector 2 is connected with the cable 10 drawn out from the vehicle door. The cables 10 drawn out from the vehicle body and the door are connected to each other through the engagement of the female connector 2 and the male connector 1.

The guide connecting device 3 includes cam recesses 32 and locking recesses 33 which are formed on the outer surface of the fitting part 13 of the male connector 1, and a slide lever 34 which is slidably provided in the female connector 2 and has guide protrusions 341 moveable along the cam recesses 32 and locking protrusions 342 lockable in the locking recesses 33.

As shown in the drawings, the cam recesses 32 and the locking recesses 33 are formed symmetrically on both the outer side surfaces of the fitting part 13 of the male connector 1.

The guide protrusions 341 and the locking protrusions 342 are formed symmetrically on both the inner side surfaces of the slide lever 34, which is slidably provided in the female connector 2, so as to be moveable along the cam recesses 32 and to be lockable in the locking recesses 33 of the male connector 1.

With the above configuration, if the slide lever 34 is pushed upwards, the guide protrusions 341 move along the cam recesses 32. If the slide lever 34 rises to the end, the locking protrusions 342 are inserted in the locking recesses 33, thereby assembling the female connector 2 and the male connector 1.

Hereinafter, a process of assembling the connector according to the first embodiment of the present invention will be described.

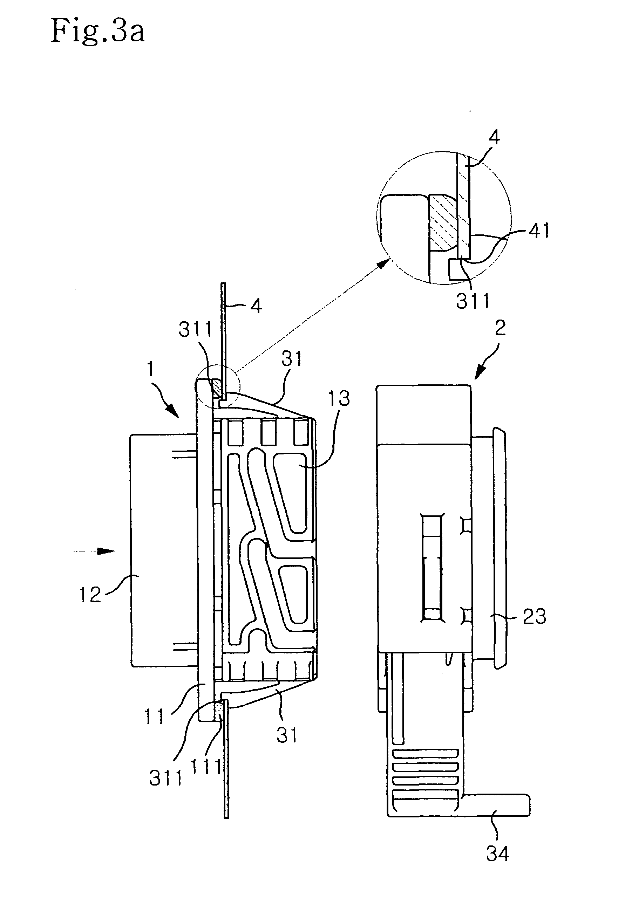

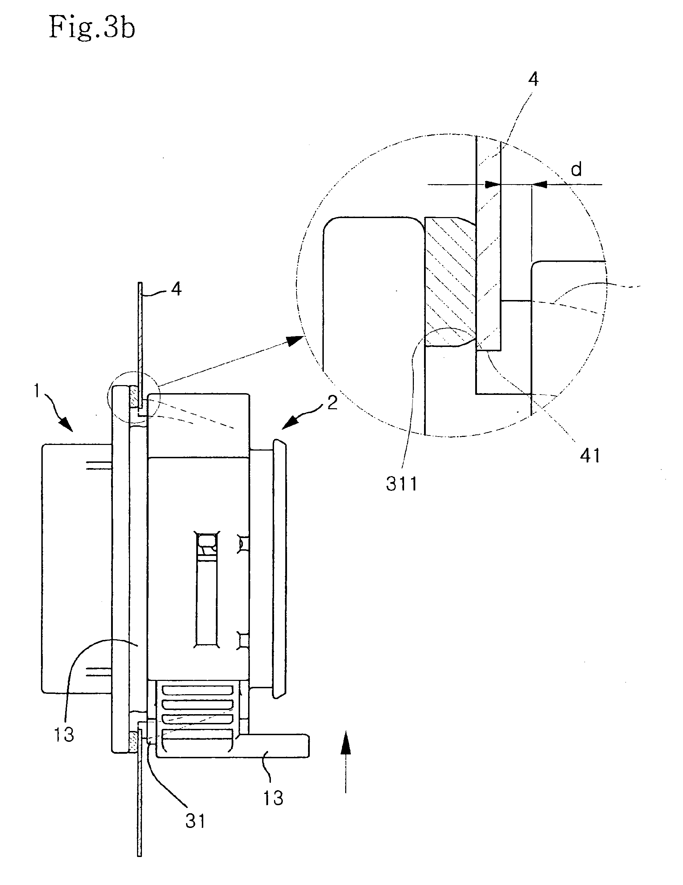

Figs. 3a and 3b illustrate a process of assembling the connector in accordance with the first embodiment of the present invention. More particularly, FIG. 3a illustrates a step of installing the male connector to the panel of the vehicle body and a step of temporarily engaging the female connector with the male connector, and FIG. 3b illustrates a step of assembling the connector.

First, the male connector 1 is installed to the panel 4 of the vehicle body by inserting the fitting part 13 of the male connector 1 through the connector mounting hole 41 from the interior of the panel 4 of the vehicle body to the exterior.

When fitting the male connector 1 through the connector mounting hole 41, a worker pushes the male connector 1 until edges of the connector mounting hole 41 are fitted in latching recesses 311 of a plurality of elastic members 31 which are formed on the outer surface of the fitting part 13.

Next, the female connector 2 is temporarily engaged with the fitting part 13 of the male connector 1.

Then, by manipulating the slide lever 34 comprising the guide connecting device 3 provided in the female connector 2, the female connector 2 is completely engaged with the fitting part 13 of the male connector 1.

Described in detail, if the slide lever 34 is pushed upward, the guide protrusions 341 provided on the slide lever 34 move along the cam recesses 32. If the slide lever 34 rises to the end, the locking protrusions 342 are inserted in the locking recesses 33, thereby assembling the female connector 2 and the male connector 1.

On the other hand, as shown in FIG. 3b, it may occur that the slide lever 34 does not fully slide when assembling the female connector 2 and the male connector 1 due to an allowed tolerance generated in the manufacturing process of the connector and an accumulated tolerance generated in the assembling process of the connector. In other words, because of the allowed tolerance generated in the manufacture and the accumulated tolerance generated in the assembly, a distance between the end of the female connector 2 and the flange 11 of the male connector 1 gets narrow, which causes a problem in that the slide lever 34 provided in the female connector 2 cannot be fully locked into place.

To prevent this problem, in consideration of the tolerance generated in the manufacturing process of the connector according to the first embodiment, the female connector 2 and the male connector 1 are manufactured so that when the female connector 2 and the male connector 1 are engaged, a distance d between the end of the female connector 2 and a latching end 312 formed at the latching recess 311 of the male connector 1 is larger than zero, to generate a gap. With this configuration, when the female connector 2 and the male connector 1 are engaged, the slide lever 34 can be fully locked.

Accordingly, the assembly defect of the female connector 2 and the male connector 1 can be prevented in advance by manufacturing the female and male connectors 2 and 1 so that the aforesaid distance d is set to be larger than zero.

As a result, the connector according to the first embodiment of the present invention has an advantage of improving an assembly efficiency of the connector to the maximum, by enabling a worker to securely install the female and male connectors 2 and 1 to the panel 4 of the vehicle body by only the engaging process of the female and male connectors 2 and 1 without using any coupling means such as a bolt.

However, when installing the male connector 1 comprising the connector according to the first embodiment through the connector mounting hole 41 of the panel 4 of the vehicle body, because a worker cannot exert a sufficient pushing force on the male connector 1, due to a small inner space of the panel 4 of the vehicle body, a problem frequently occurs that the male connector 1 cannot be fully fitted through the connector mounting hole 41.

Further, when fitting the male connector 1 through the connector mounting hole 41, because the latching recesses 311 of the elastic members 31 formed at the male connector 1 are very narrow and the waterproof seal 111 provided on the flange 11 generates a repulsive force, it is necessary to firmly push the male connector 1 at the end of the process of fitting the male connector 1. However, because a worker cannot exert a sufficient pushing force on the male connector 1 as described above, a defect in the assembly of the male connector 1 occasionally occurs.

Because of the above reason, a problem occurs in that the female connector 2 is engaged with the male connector 1 while the end of the connecting mounting hole 41 is not fitted in the latching recesses 311 of the elastic members 31 formed on the male connector 2, which results in rattling of the connector after release of the vehicle or even results in separation of the connector from the panel 4 of the vehicle body.

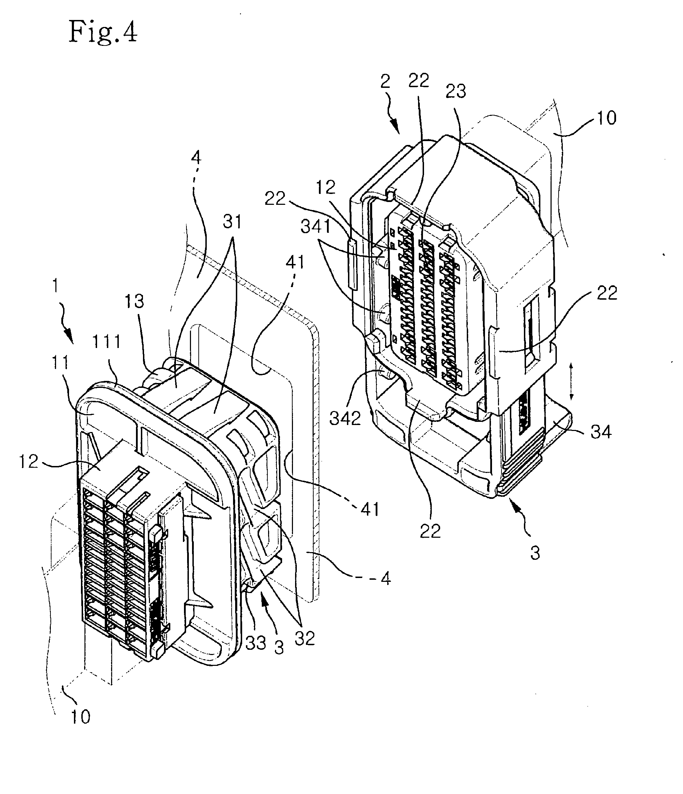

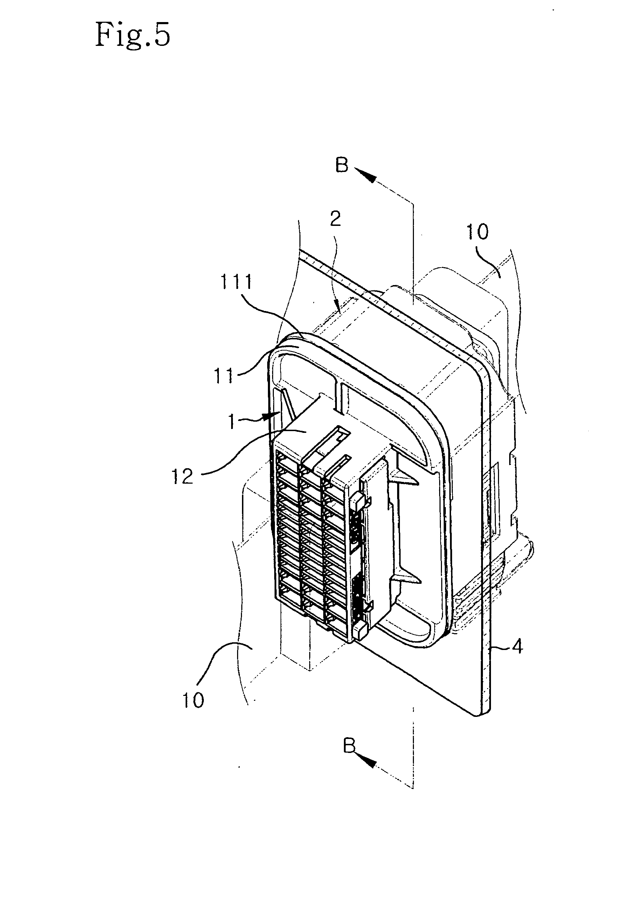

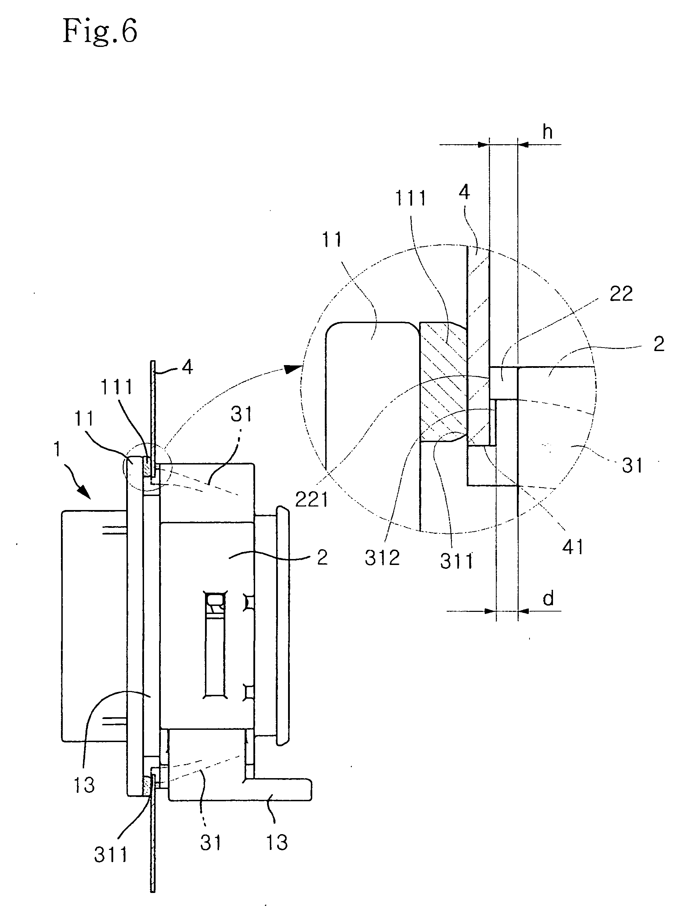

To prevent the above-described problem of assembly defect of the male connector, a connector according to the second embodiment of the present invention has been devised. The connector according to the second embodiment is shown in FIGS 4 to 7c.

The connector according to the second embodiment includes fundamentally all constituent components of the connector according to the first embodiment.

The connector according to the second embodiment is constituted such that the distance d between the end of the female connector 2 and the latching end 312 formed at the latching recess 311 of the male connector 1 is larger than zero, to generate a gap, and a protruding portion 22 is provided at the end of the female connector 2 to press the panel 4 of the vehicle body so that the end of the connector mounting hole 41 can be perfectly fitted in the latching recesses 311 of the elastic members 31.

The protruding portion 22 has a protruding length h which is equal to or longer than the distance d between the end of the female connector 2 and the latching end 312 of the latching recess 311 when the female connector 2 and the male connector 1 are engaged. In other words, the protruding length h is a length from the end of the female connector 2 to an end 221 of the protruding portion 22. As a consequence the protruding length h which is equal to or longer than the above distance d, the end 221 of the protruding portion 22 securely and closely contacts the panel 4 of the vehicle body when the female connector 2 and the male connector 1 are engaged with each other.

As shown in the drawings, the protruding portion 22 is provided in plural numbers on the end of the female connector 2. However, although it is not shown in the drawings, the protruding portion 22 may be provided in a single body which protrudes from the whole circumference of the end of the female connector 2.

Hereinafter, a process of assembling the connector according to the second embodiment of the present invention will be described.

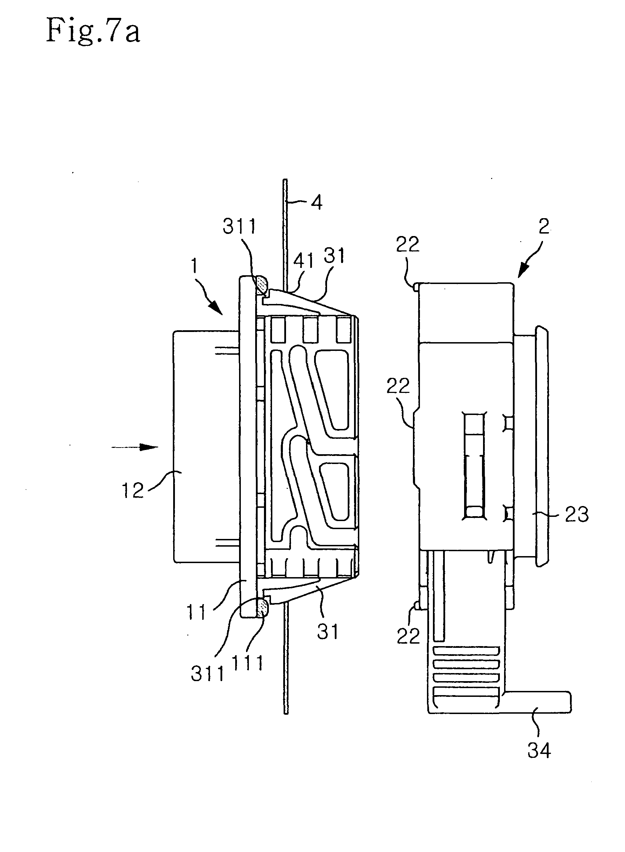

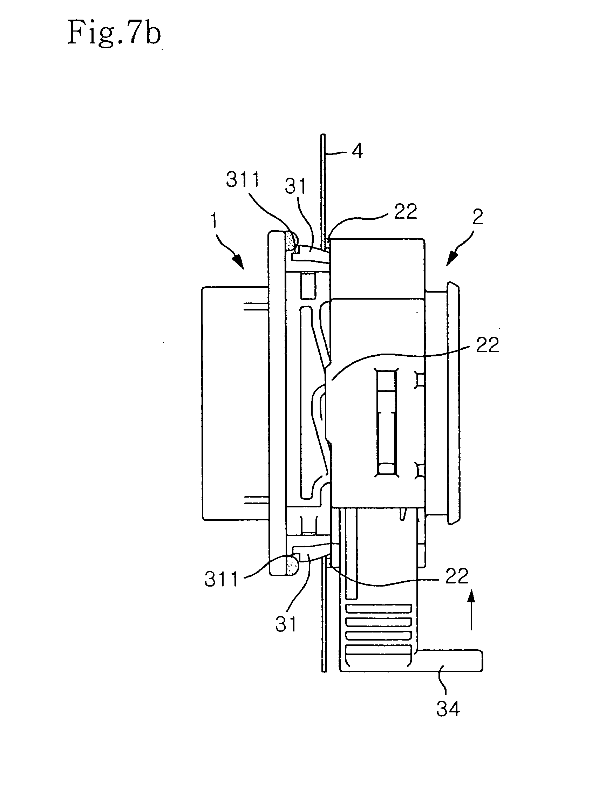

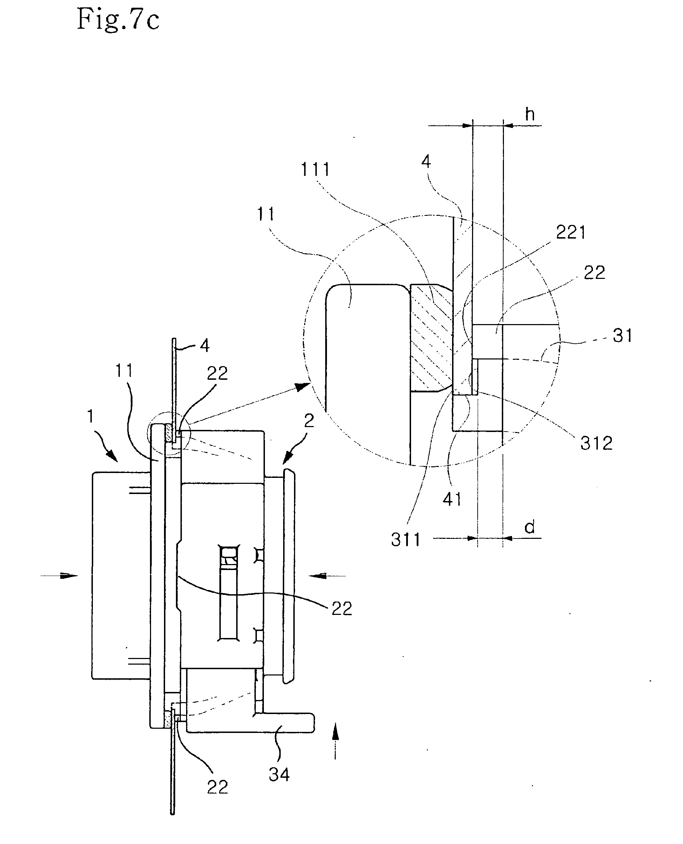

FIGS. 7a, 7b and 7c illustrate the process of assembling the connector in accordance with the second embodiment of the present invention. More particularly, FIG. 7a illustrates a step of installing the male connector to the panel of the vehicle body, FIG. 7b illustrates a step of engaging the female connector with the male connector, and FIG. 7c illustrates a step of assembling the connector.

In the following description, the assembling process of the connector according to the second embodiment will be explained on the assumption that the male connector 1 is not perfectly installed at the initial step.

In a state such that the male connector 1 is not perfectly fitted through the connector mounting hole 41 of the panel 4 of the vehicle body due to a worker's assembly mistake (refer to FIG. 7a), the female connector 2 is temporarily engaged with the fitting part 13 of the male connector 1 (refer to FIG. 7b).

Then, by manipulating the slide lever 34 comprising the guide connecting device 3 provided in the female connector 2, the protruding portion 22 of the female connector 2 pushes the panel 4 of the vehicle body, and the male connector 1 is pulled toward the female connector 2, so that the end of the connector mounting hole 41 is fitted in the latching recesses 311 of the elastic members 31. Accordingly, the female connector 2 and the male connector 1 can be assembled without a defect.

In other words, as shown in FIGs. 7b and 7c, when operating the slide lever 34 of the female connector 2, the male connector 1 is pulled toward the female connector 2 by the protruding portion 22 of the female connector 2 pushing the panel 4 of the vehicle body.

Accordingly, also in the state such that the male connector 1 is not perfectly installed in the panel 4 of the vehicle body, the end of the connector mounting hole 41 can be fitted in the latching recesses 311 of the elastic members 31 through the operation of the slide lever 34.

Described in more detail, when operating the slide lever 34, the protruding portion 22 of the female connector 2 pushes the panel 4 of the vehicle body. Through the process of pushing the panel 4 of the vehicle body by the protruding portion 22, the male connector 1 is pulled toward the female connector 2.

At this time, the elastic members 31 provided at the male connector 1 are bent inwardly. At the moment when the male connector 1 has been pulled completely to its fully seated position, the end of the connector mounting hole 41 of the panel 4 of the vehicle body is fitted in the latching recesses 311 of the elastic members 31.

As described above, because the protruding length h of the protruding portion 22 formed on the end of the female connector 2 is equal to or longer than the distance d between the end of the female connector 2 and the latching end 312 of the latching recess 311 when the female connector 2 and the male connector 1 are engaged, at the moment when the male connector 1 has been pulled completely to its fully seated position, the end of the connector mounting hole 41 of the panel 4 of the vehicle body is securely fitted in the latching recesses 311 of the elastic members 31.

Accordingly, through the engaging process of the female connector 2, the male connector 1 can be securely fixed in the connector mounting hole 41 of the panel 4 of the vehicle body without a defect.

Further, the waterproof seal 111 provided on the flange 11 of the male connector 1 can closely contact the panel 4 of the vehicle body because the protruding length h of the protruding portion 22 is equal to or longer than the distance d between the end of the female connector 2 and the latching end 312 of the latching recess 311.

As a result, a waterproofing effect of the connector can be improved to the maximum by means of the waterproof seal 111 provided on the flange 11.

As is apparent from the above description, the cable connector for a vehicle door according to the present invention can improve an assembly efficiency of the connector by enabling a worker to securely install the male connector to the panel of the vehicle body by only the engaging process of the female connector and the male connector without using a coupling means such as a bolt.

Further, since the end of the connector mounting hole is securely fitted in the latching recesses of a plurality of elastic members formed on the male connector through one manipulation of the slide lever in the engaging process of the female connector and the male connector, an assembly defect of the connector can be prevented.

Although the preferred embodiments of the present invention have been disclosed for illustrative purposes, those skilled in the art will appreciate that various modifications, additions and substitutions are possible, without departing from the scope of the invention as defined in the accompanying claims.

## Claims

1. A cable connector (1, 2) for a vehicle door, comprising:
a male connector (1) including a contact terminal (12), a fitting part (13), a flange (11) provided between the contact terminal (12) and the fitting part (13), and a waterproof seal (111) ;
a female connector (2) engageable with the fitting part (13) of the male connector (1), the female connector (2) including a contact terminal (23);
a plurality of elastic members (31) formed on an outer surface of the fitting part (13), the elastic members (31) including latching recesses (311) in which an edge of a connector mounting hole (41) of a panel (4) of a vehicle body is fittable; and
a guide connecting device (3) including cam recesses (32) and locking recesses (33) formed on the outer surface of the fitting part (13), and a slide lever (34) slidably provided in the female connector (2), the slide lever (34) having guide protrusions (341) moveable along the cam recesses (32) and locking protrusions (342) lockable in the locking recesses (33),
**characterised by**, when the female connector (2) and the male connector (1) are engaged, a distance d between the end of the female connector (2) and a latching end (312) formed at the latching recess (311) of the male connector (1) is larger than zero, to generate a gap.

2. The cable connector according to claim 1, wherein the female connector (2) is provided with at least one protruding portion (22) at an end thereof to press the panel (4) of the vehicle body so that the edge of the connector mounting hole can be fitted in the latching recesses (311) of the elastic members (31).

3. The cable connector according to claim 2, wherein the protruding portion (22) has a protruding length (h) which is equal to or longer than a distance between the end of the female connector (2) and a latching end of each of the latching recesses (311) when the female connector (2) and the male connector (1) are engaged.

4. The cable connector according to claim 2 or 3, wherein the protruding portion (22) includes plural protruding portions (22) which protrude from the end of the female connector (2).

5. The cable connector according to claim 2 or 3, wherein the protruding portion (22) is provided as a single body which protrudes from a whole circumference of the end of the female connector (2).

6. The cable connector according to any of the preceding claims wherein the plurality of elastic members (31) formed on an outer surface of the fitting part (13) of the male connector (1) are arranged on opposite sides of the male connector.

## Patentansprüche

1. Kabel-Steckverbinder (1, 2) für eine Fahrzeugtür, der Folgendes umfasst:
einen Steckerverbinder (1), der eine Kontaktklemme (12), einen Passteil (13), einen Flansch (11), der zwischen der Kontaktklemme (12) und dem Passteil (13) bereitgestellt wird, und eine wasserdichte Dichtung (111) einschließt,
einen Buchsenverbinder (2), der mit dem Passteil (13) des Steckerverbinders (1) in Eingriff gebracht werden kann, wobei der Buchsenverbinder (2) eine Kontaktklemme (23) einschließt,
mehrere elastische Elemente (31), die an der Außenfläche des Passteils (13) geformt sind, wobei die elastischen Elemente (31) Arretierungsaussparungen (311) einschließen, in die eine Kante eines Steckverbinder-Anbringungslochs (41) einer Tafel (4) einer Fahrzeugkarosserie eingepasst werden kann, und
eine Führungsverbindungseinrichtung (3), die Nockenaussparungen (32) und Verriegelungsaussparungen (33), die an der Außenfläche des Passteils (13) geformt sind, und einen Gleithebel (34), der verschiebbar in dem Buchsenverbinder (2) bereitgestellt wird, einschließt, wobei der Gleithebel (34) Führungsvorsprünge (341), die entlang der Nockenaussparungen (32) bewegt werden können, und Verriegelungsvorsprünge (342), die in den Verriegelungsaussparungen (33) verriegelt werden können, hat,
**dadurch gekennzeichnet, dass**, wenn der Buchsenverbinder (2) und der Steckerverbinder (1) in Eingriff gebracht sind, ein Abstand (d) zwischen dem Ende des Buchsenverbinder (2) und einem Arretierungsende (312), das an der Arretierungsaussparung (311) des Steckerverbinders (1) geformt ist, größer als null ist, um einen Spalt zu erzeugen.

2. Kabel-Steckverbinder nach Anspruch 1, wobei der Buchsenverbinder (2) an einem Ende desselben mit wenigstens einem vorspringenden Abschnitt (22) versehen ist, um die Tafel (4) der Fahrzeugkarosserie zu drücken, so dass die Kante des Steckverbinder-Anbringungslochs in die Arretierungsaussparungen (311) der elastischen Elemente (31) eingepasst werden kann.

3. Kabel-Steckverbinder nach Anspruch 2, wobei der vorspringende Abschnitt (22) eine vorspringende Länge (h) hat, die gleich einem Abstand zwischen dem Ende des Buchsenverbinders (2) und einem Arretierungsende jeder der Arretierungsaussparungen (311) oder länger als derselbe ist, wenn der Buchsenverbinder (2) und der Steckerverbinder (1) in Eingriff gebracht sind.

4. Kabel-Steckverbinder nach Anspruch 2 oder 3, wobei der vorspringende Abschnitt (22) mehrere vorspringende Abschnitte (22) einschließt, die von dem Ende des Buchsenverbinders (2) aus vorspringen.

5. Kabel-Steckverbinder nach Anspruch 2 oder 3, wobei der vorspringende Abschnitt (22) als ein einziger Korpus bereitgestellt wird, der von dem gesamten Umfang des Endes des Buchsenverbinders (2) aus vorspringt.

6. Kabel-Steckverbinder nach einem der vorhergehenden Ansprüche, wobei die mehreren elastischen Elemente (31), die an einer Außenfläche des Passteils (13) des Steckerverbinders (1) geformt sind, auf gegenüberliegenden Seiten des Steckerverbinders angeordnet sind.

## Revendications

1. Connecteur de câble (1, 2) pour la porte d'un véhicule, comprenant :
un connecteur mâle (1), englobant une borne de contact (12), une partie d'ajustement (13), une bride (11) agencée entre la borne de contact (12) et la partie d'ajustement (13), et un joint étanche à l'eau (111) ;
un connecteur femelle (2), pouvant être engagé dans la partie d'ajustement (13) du connecteur mâle (1), le connecteur femelle (2) englobant une borne de contact (23) ;
plusieurs éléments élastiques (31), formés sur une surface externe de la partie d'ajustement (13), les éléments élastiques (31) englobant des évidements de verrouillage (311) dans lesquels peut être ajusté un bord d'un trou de montage du connecteur (41) d'un panneau (44) de la carrosserie du véhicule ; et
un dispositif de connexion de guidage (3), englobant des évidements à came (32) et des évidements de blocage (33) formés sur la surface externe de la partie d'ajustement (13), et un levier coulissant (34), agencé de manière coulissante dans le connecteur femelle (2), le levier coulissant (34) comportant des saillies de guidage (341) pouvant être déplacées le long des évidements à came (32), et des saillies de blocage (342) pouvant être bloquées dans les évidements de blocage (33) ;
**caractérisé en ce que**, lorsque le connecteur femelle (2) et le connecteur mâle (1) sont engagés, une distance d entre l'extrémité du connecteur femelle (2) et une extrémité de verrouillage (312), formée au niveau de l'évidement de verrouillage (311) du connecteur mâle (1), est supérieure à zéro, de sorte à établir un espace.

2. Connecteur de câble selon la revendication 1, dans lequel le connecteur femelle (2) comporte au moins une partie en saillie (22) au niveau d'une de ses extrémités, pour exercer une pression sur le panneau (4) de la carrosserie du véhicule, de sorte à permettre l'ajustement du bord du trou de montage du connecteur dans les évidements de verrouillage (311) des éléments élastiques (31).

3. Connecteur de câble selon la revendication 2, dans lequel la partie en saillie (22) a une longueur de débordement (h) égale ou supérieure à une distance entre l'extrémité du connecteur femelle (2) et une extrémité de verrouillage de chacun des évidements de verrouillage (311) lorsque le connecteur femelle (2) et le connecteur mâle (1) sont engagés.

4. Connecteur de câble selon les revendications 2 ou 3, dans lequel la partie en saillie (22) englobe plusieurs parties en saillie (22), débordant de l'extrémité du connecteur femelle (2).

5. Connecteur de câble selon les revendications 2 ou 3, dans lequel la partie en saillie (22) est agencée sous forme d'un seul corps débordant de l'ensemble de la circonférence de l'extrémité du connecteur femelle (2).

6. Connecteur de câble selon l'une quelconque des revendications précédentes, dans lequel les plusieurs éléments élastiques (31) formés sur une surface externe de la partie d'ajustement (13) du connecteur mâle (1) sont agencés sur les côtés opposés du connecteur mâle.
